Europäisches Patentamt

European Patent Office

Office européen des brevets

(19)

(11) Publication number: **0 364 053**

**A1**

(12) **EUROPEAN PATENT APPLICATION**

(21) Application number: **89202570.1**

(22) Date of filing: **12.10.89**

(51) Int. Cl.⁵: **A23L 2/38 , A23C 9/142 , A23L 1/30**

(30) Priority: **13.10.88 NL 8802525**

(43) Date of publication of application:
**18.04.90 Bulletin 90/16**

(84) Designated Contracting States:
**BE DE ES FR GB GR IT LU NL SE**

(71) Applicant: **DMV-CAMPINA B.V.**
**NCB-Laan 80 P.O. Box 13**
**NL-5462 GE Veghel(NL)**

(72) Inventor: **Ermens, Hermanus Wilhelmus**
**Antonius**
**Pelmolen 11**
**NL-5841 BE Oploo(NL)**
Inventor: **Van den Hoven, Martinus Marinus**
**Gerardus Maria**
**Seringelaar 5**
**NL-5467 ED Veghel(NL)**
Inventor: **Van Moorsel, Alexander Michael**
**Marie**
**Broekweg 60**
**NL-5503 GG Veldhoven(NL)**

(74) Representative: **Smulders, Theodorus A.H.J.,**
**Ir. et al**
**Vereenigde Octrooibureaux Nieuwe Parklaan**
**107**
**NL-2587 BP 's-Gravenhage(NL)**

(54) **A process for preparing hypotonic or isotonic beverages.**

(57) A process for preparing a beverage suitable as a thirst-quencher after physical exertion, having an isotonic or hypotonic composition, which is capable of compensating for losses of energy and electrolyte, wherein isotonic or hypotonic solutions of carbohydrates and, if desired, flavorings, vitamins and other conventional ingredients are added to permeate obtained by ultrafiltration or neutral milk or whey.

EP 0 364 053 A1

# a process for preparing hypotonic or isotonic beverages

This invention relates to a beverage suitable as a thirst-quencher after physical exertion, e.g. in practising sports, having an isotonic or hypotonic composition, which both supplies energy and compensates for losses of electrolytes. Physical exertion entails much energy consumption within a short period of time, which results in that, on the one hand, first the physical reserves of carbohydrate and then the reserves of fat are drawn on, but, on the other hand, a surplus of heat is produced which the body tries to get rid of by perspiration so that both fluid and salts are lost. Therefore, especially sporting people are in need of a beverage which rapidly makes good the resulting deficiencies in a suitable and pleasant manner. It is known that the ingredients of such a beverage can be very favourably and rapidly absorbed from the gastrointestinal trackt if the beverage has an osmotic value which is maximally as high as that of the blood and other body fluids.

Fluids having an osmotic value equal to that of blood are called isotonic fluids; fluids having a lower osmotic value are called hypotonic fluids. Because the absorption of water from a more strongly concentrated hypertonic solution in the gastrointestinal trackt would mean that the fluid becomes more and more concentrated according as more water is absorbed, drinking such a hypertonic beverage is no solution to the thirst problem. Therefore, a thirst-quenching beverage should preferably be isotonic or a little but not too strongly hypotonic. The point is that drinking highly diluted beverages or water alone gives little energy, if any, nor a compensation for the salts lost. Taking in separate by salt pills compensating for the loss of salt and glucose tablets for new energy, combined with drinking water, mostly leads to a lack of balance which can be avoided by uniting all the required materials in one beverage.

Dutch patent 156603 discloses the preparation of isotonic beverages from water, NaCl, $NaH_2PO_4$, $KH_2PO_4$, KCl, $NaHCO_3$, glucose and flavorings.

In addition to citric acids and lemon flavor, the flavorings used also comprise calcium cyclamate. The above salts are dissolved in water in measured amounts with the sugars and flavorings.

Dutch patent application 7610539 discloses similar beverages which, however, are not isotonic but hypotonic with an osmolarity of 80 to 200 mOsm. The normal value of blood is at about 300 mOsm. Dry mixtures of a number of salts, sugars, acids, flavoring and coloring are dissolved before use in a suitable amount of water.

US patent 4312856 discloses beverages having a comparable osmotic value from a mixture of salts and carbohydrates, in which, however, few monosaccharides, if any, but di- and higher oligosaccharides, such as maltodextrins, are added as energy suppliers.

European patent 0044116 discloses isotonic beverages which in addition to electrolytes, water and energy also have to compensate for deficiencies of protein by adding whey-protein concentrate. Here a part of the salt in the beverage is salt from milk which is usually contained as a natural ingredient in a whey-protein composition mostly recovered by ultra-filtration, but common salt is also added.

European patent application EP 0223540 discloses isotonic beverages which mainly have to supply energy and for this reason only contain monosaccharides and oligosaccharides, acid, flavorings and water, without minerals.

Dutch patent application 8702547 mentions that the waste fluid obtained when electrodialytically desalting whey products could be used after acidification to prepare isotonic beverages. As a result of the selective effect of the membranes used in electrodialysis, the salt balance naturally present in milk products is generally disturbed. Consequently, and owing to the fact that in general mineral salts are added to the waste fluid in the desalting process, the electrodialytic process gives a less favourably tasting liquid as compared with the permeate obtained from milk or whey during ultrafiltration. Moreover, such an electrodialytically obtained product is not isotonic, since the concentration thereof is adjusted to a value which is as favourable as possible for the desalting process.

The use as a beverage of the permeate obtained when recovering whey-protein concentrates from whey or milk by means of ultra-filtration is disclosed in German patent 2924242. According to this publication a concentrate of milk sugar obtained by reverse osmosis is then added to the beverage. The objects of this invention are especially of an economical character, because waste of little value, the ultrafiltration permeate, is thus processed into a beverage. The author of this German patent has failed to see that a special type of isotonic beverage can thus be obtained. The point is that milk is naturally isotonic with blood so that when taking in milk as a food product young people and mammals have as few problems of an osmotic character as mothers have when producing milk.

Consequently, milk is a natural isotonic beverage and since in the membrane process of ultrafiltration only non-osmotic active, high-molecular substances, such as proteins as well as fats and calcium salts, are removed from the milk, ultra-filtration permeate also has the same osmotic value as blood.

However, the concentration of milk sugar by means of reverse osmosis nullifies this special effect. The beverages from German patent 2924242 enriched with milk sugar are therefore not isotonic but hypertonic. The same applies to the spray dried beverages on the basis of skim milk permeate, strawberry concentrate and sugar which are to be dissolved in water at a concentration of 15% solids, as described by EL-Shibiny et al in Zeitschrift f. Lebensm. Forsch. u. Unters. 181 (1985) 223-225. At such a solids concentration the osmilarity is substantially above that of the blood and other body fluids. Consequently, they are hardly suitable as thirst-quenchers after heavy physical exertion if the body also rapidly needs energy and salt. This applies the more so as the beverage only contains milk sugar as a carbohydrate, since milk sugar as such cannot be absorbed through the intestinal wall and, moreover, neither in the mouth nor in the stomach can milk sugar be separated into the better absorbable sugars glucose and galactose. In fact, this only occurs in the intestinal trackt and slowly at that, and with a non-negligible percentage of the adults it even occurs rarely, if ever.

As an isotonic beverage milk or whey ultrafiltration permeate without additions therefore supplies no directly available energy, but it does supply water and salts in a physio-logically excellently balanced ratio.

It has now been found possible to avoid all the above drawbacks of known beverages designed as thirst-quenchers in sports and in other situations in which a rapidly absorbable amount of energy, electrolytes and water is required, by adding isotonic or hypotonic solutions of carbohydrates and, if desired, flavorings, vitamins and other known ingredients to the permeate obtained in the ultrafiltration of neutral milk or whey. Preferably, the carbohydrates must be of a type that can be rapidly absorbed, such as glucose and fructose, or of a type that is decomposed in the gastrointestinal trackt to form such rapidly absorbable sugars, under the influence of digestive enzymes.

As far as such carbohydrates consist of glucose polymers, such as maltose, maltotriose and maltodextrins, obtained by starch hydrolysis, glucose can be rapidly formed therefrom by pankreas amylase.

Because the beverage is not hypotonic, it rapidly passes through the stomach and the carbohydrate separation and sugar absorption to the blood also proceeds rapidly and efficiently.

But if the same osmotic value would be maintained in a beverage containing only glucose as a carbohydrate, the beverage could contain much less energy per liter. The point is that the molecular weight is decisive of the osmotic value and since in case of maltose, maltotriose etc. that molecular weight is higher by almost respectively 2, 3, 4 etc. times than with glucose, a beverage containing those higher glucose polymers can also contain 2, 3, 4 or more times more energy than a pure glucose beverage at a specific osmotic value.

For this reason saccharose, too, can be added to the beverage as an energy carrier, but, even so, as an isotonic solution saccharose always gives less energy than maltodextrins.

Euopean patent application EP 0264-17 discloses the use of glucose polymers only having large chain lengths in powders to be used for the preparation of medicated beverages.

A drawback thereof is that no directly absorbable sugar is contained in the beverage so that the beverage is not suitable for maintaining the direct energy requirement during sporting achievements. Moreover, the product has the remarkable drawback that no isotonic beverage can be made therefrom, unless the consumer has a weighing device or measuring system available for measuring the correct amounts of powder and water. In addition, the product lacks the advantage of the special salt balance naturally present in milk.

As far as polymeric carbohydrates do not taste sweetly enough, this deficiency can be compensated by processing into the beverage a sweetener of a conventional type, e.g., saccharin, thaumatin, stevioside or the peptide sweeteners such as the substance marketed under the name of aspartame. Since such a sweetener is many times sweeter than e.g. saccharose, only a minor proportion of additional water is required in the beverage to bring the beverage to the required osmotic value again.

Fruit flavors and other flavorings can be added to the beverage to increase its attraction. As far as acids are used for this purpose, it must of course be taken into account that such an acid influences the electrolyte balance and the osmotic value of the beverage.

Thus, for instance, medicinal hydrochloric acid or phosphoric acid can be used to reduce the pH of the beverage, but this does change the contents of chloride and phosphate ions, respectively. Changes in the dissociation of, e.g., the phosphate ions by changing the pH lead to changes in the osmotic value of the beverage which must of course be corrected to maintain osmolarity.

It has been found, however, that such mineral acids, like the salt mixtures used in older isotonic beverages, give the beverage an artificial taste, rather defined as "pharmacist's taste". Jenness and Koops have described in Nederlands Melk en Zuivel Tijdschrift 16 (1962) 153-164 how to make an imitation of milk-ultrafiltrate from a mixture of inorganic salts and citrates. Surprisingly, beverages according to the ingention on the basis of natural milk or whey permeate in which the salt is present in a naturally balanced manner in the form of the different ions from milk do not show such an off-flavor, possibly because the combination with the other milk ingredients, such as milk sugar, vitamins or other low-molecular ingredients present in minor proportions acts favorably on the flavor impression. For this reason there may preferably also be selected a natural food grade acid for acidifying beverages according to the invention.

This has the additional advantage that in that case such an acid may also contribute to the directly available energy content of the beverage. In the first place, lactic acid may be considered for this purpose. Instead of lactic acid, an acid having a slightly higher molecular weight which is aborbed in the intestine only after separation may also be used. Citric acid has a higher molecular weight than lactic acid, but also gluconic acid or higher analogous acids, e.g., lactobionic acid, can be processed into the beverages according to the invention as energy-supplying acids.

The beverages according to the invention differ from known isotonic beverages by the fact that they show an appreciably higher potassium/sodium ratio.

Conventional products are those containing much sodium and little potassium, e.g., twice as much sodium as potassium ions. Most probably, the reason for this ratio is to be sought in the conception that on perspiration the body especially loses sodium salts and that, consequently, especially that ion is to be supplemented in a thirst-quencher for sporting people.

But what happens in case of heavy physical exertion is of course more than that the athlete only perspires. It is known that in the muscles of athletes potassium plays an important part and that in case of heavy exertion especially potassium ions are released from the cells. The earlier mentioned muscle spasm in case of too heavy sports exertion entails abnormal losses of potassium ions. It is therefore useful indeed to adjust the balance of minerals in a sports beverage in such a manner that it corresponds to the normal balance in body fluids, such as blood, and to select it as it naturally is in milk, the most natural beverage for mammals.

It has been found that this natural balance of salts in a beverage according to the invention may lead to a surprisingly favorable effect on the flavor. The use of potassium salts instead of sodium salts for isotonic beverages in general has the drawback that instead of the known salt flavor given by a sodium salt as common salt potassium ions have a bitter off-flavor. In beverages according to the invention such an unpleasant flavor is not recognizably present, because it may be assumed that the natural balance of the various mineral ingredients in milk is experienced as pleasant by the organs of taste.

The use of a separation technique, such as ultrafiltration, in which the salt balance as occurring in milk is not disturbed, enables the recovery from milk of a raw material for isotonic or hypotonic beverages, which, on the one hand, has the advantage of showing an ideal composition of mineral ingredients, but, on the other hand, also has the advantage that no complicated mixture of salts needs to be measured and dissolved. Considered by itself, the process of recovering and purifying the relevant salts in a mixture, as known e.g., from the publication in Nederlands Melk en Zuiveltijdschrift 16 (1962) 153-164 by Jenness and Koops, is expensive and laborious but, subsequently, it is necessary for all those separate salts to measure and dissolve the desired amounts.

Minor amounts of unknown contaminations in one or more of those salts may give the mixture the earlier mentioned "pharmacist's flavor". But the use of ultrafiltrate of milk or whey avoids all these drawbacks and also provides a solution for an economically justifiable use of such ultra-filtration permeates released as a by-product in the preparation of milk- protein concentrates or whey protein concentrates. Milk actually contains only a few percents of protein and whey even less, so that from a quantitative point of view the permeate is the main product in the ultrafiltration. And although in general the protein product is the most important and most expensive ingredient of the milk or the whey from an economic point of view, a suitable economically .ustifiable processing of the permeate is necessary for a justifiable use of ultrafiltration.

If desired, protein ingredients may also be added to the beverage. In case of heavy physical exertion a non-negligible decomposition of body protein may occur, which is preferably to be compensated as soon as possible. For this purpose, as disclosed in EP 0044116, a soluble protein, such as whey protein, may be selected or the nitrogen compounds may be added as amino acids.

In the former case there is the advantage that the highmolecular protein has no significant effect on the osmotic value of the beverage, but at the same time the digestive system requires some time before such a protein is sufficiently decomposed to be absorbable. The free amino acids can be absorbed rather rapidly but have a relatively high osmotic contribution.

It is known that peptides of two to three amino acid residues are generally beter resorbed by the intestine than free amino acids so that the nitrogen compounds are preferably added as small peptides to beverages of the type in question.

In this respect the use of the sweetener aspartame has a special function because it influences the flavor and the protein value of the beverage at the same time. But as far as peptides with important amino acid residues give an unfavorable, e.g., bitter off-flavor, it is better to select such mixtures thereof that the molecular weight is optimal both with respect to the osmotic contribution and with respect to flavor.

Since milk ultrafiltrate naturally shows a bright yellow color due to the presence of riboflavine (vitamin B2), it is not strictly necessary to add a coloring agent to the beverage. But if desired, in order to give the consumer a specific flavor impression, other colors may also be given to the beverage or the riboflavine color may be removed in a manner known per se.

In the preparation of a beverage according to the invention the starting substance is preferably milk, either pasteurized or raw, with the cream being removed or not, but preferably non-soured, since otherwise a pH-change causes calcium phosphates from the undissolved micellar form to be converted into dissolved form, which results in that the originally isotonic state is disturbed. Furthermore, sweet whey can be the starting material, provided it has the same ion composition as milk.

A permeate is separated from this milk or whey by means of ultrafiltration through semi-permeabie membranes in an otherwise well-known manner.

The raw material is then circulated along one side of a semi-permeable membrane applying excess pressure. In general, the membrane is excellently permeable to water and to the low-molecular substances dissolved in milk, but colloidally dispersed proteins, micelles of protein and minerals or fat globules are not passed. The permaeate is therefore a solution having substantially the same composition as milk but being deficient in protein, fat and calcium phosphate. Ionic salts, lactose, vitamins, low-molecular nitrogen compounds etc. occur in relation to the water in the permeates in the same ratios as in milk.

But it is also quite possible to use a somewhat more selective separating membrane which allows complete passage of the salts, in addition to water, but an appreciably more difficult passage of a substance having the molecular dimensions of a lactose molecule. Such membranes show an appreciable retention of the lactose, as a result of which the permeate is less rich in lactose than the aqueous phase in milk. Consequently, in such a case the osmotic value of the permeate is somewhat lower than that of milk.

When use is made of a membrane completely impermeable to lactose and salts, reference is in general no longer made to ultrafiltration but to reverse osmosis. If the liquid is subjected to a higher pressure than the osmotic pressure applying to milk, pure water can be separated from the milk, but such a process is hardly useful for the preparation of beverages according to the invention.

It is possible, however, to utilize the concentrate of such a reverse osmosis for application in combination with the invention. If the ultrafiltration permeate is concentrated differently, this also leads to products that become oversaturated with lactose in an appropriate temperature treatment. This lactose can be crystallized out, so that thus, too, the ratio between lactose and milk salts is changed. With the thus desugarized ultrafiltration permeate concentrate as a base material beverages according to the invention can be prepared by adding an appropriate amount of water. It is possible to process in such a beverage more directly absorbable carbohydrate than when the starting meaterial is a non-desugarized permeate.

The permeate obtained by means of ultrafiltration is a clear liquid. Because bacteria are too small to pass through the pores of the membrane, an ultrafiltration permeate is in general free from microorganisms causing spoilage. If this can be done aseptically, there is obtained, after admixing the further ingredients, a beverage which will not soon spoil. On the other hand, apart from the somewhat more sensitive vitamins, the beverage contains no ingredients that are damaged by pasteurization. Therefore, it is also possible without a laborious aseptic treatment to give the beverage a pasteurization treatment either before or after packaging. The sugars used in a beverage according to the invention may be both saccharose and fructose, glucose and mixtures thereof, but these low-molecular sugars make a relatively high osmotic contribution in relation to the amount of energy they supply. The same applies to the sugar mixture obtained when the lactose present in the permeate is enzymetically separated into galactose and glucose and water is added to restore the isotonic condition.

Therefore, use is preferably made of a starch hydrolysate having a relatively low DE value, which DE has the meaning of dextrose equivalent, i.e. the ratio between the apparent amount of dextrose (or glucose) calculated from the reducing power of the product and the amount of dextrose which would be formed in case of complete hydrolysis of the product. Thus a product having a DE value of 25 approximately has a molecular weight which is four times as high as that of pure dextrose, as a result of which only about one free reducing group is present per four dextrose units so that the osmotic value is about 1/4 part of the osmotic value which an equally large amount of dextrose would show in solution, but the energy content is substantially equal.

Since, however, the molecular weight of such a starch hydrolysate is an average number for the total mixture of mono-, di-, tri-, tetra- and higher polymers of dextrose the real condition is described with such a DE value only approximately. Such a mixture may therefore have a sweet taste if it still contains residual glucose the dextrose monomer), but it is also possible that only higher polymers having little sweet taste, if any, occur in such a product having a DE value of 25. As an ingredient in a beverage according to the invention such a starch hydrolysate contributes little to a sweet taste, hence it is desired in such a case to add a suitable sweetener.

In fact, the lactose present in the ultra filtration permeate also has only a slight sweet taste. In such a case there is preferably selected either a sweetener having a specific nutritive value, such as the peptide-sweetener aspartame, or a substance making in the beverage a slight contribution to the osmolarity in relation to its sweet taste.

However, the contribution of a sugar to the total flavor impression of a product like the invented thirst-quenching beverages is not only that of a sweet taste, because the feel in the mouth, the viscosity, the degree of sliminess and the impression rather indicated by the term "body" also depend on the amount and type of the sugars present in the beverage. When the amount of lactose and the maltodextrins are suitably balanced, surprisingly good effects on this "body" can be obtained in the beverages in question, without a too thick or slimy impression given by the beverage owing to the presence of high-molecular sugars. There is a very favorable combination of energy-supplying sugars in the invented beverages, because the dextrose is directly absorbable, the maltose and higher polymers are made available immediately thereafter when the digestive enzymes also release glucose therefrom and then the enzymes in the intestinal epithelium will be able to separate the lactose much more slowly.

As far as acids, flavorings, vitamins, protein ingredients etc. are further processed into the beverage, these and the processed amount of permeate are made into a mixture with so much water that the whole has no higher osmotic value than about 300 mOsm, and preferably lower. After mixing and, if required, filtering or otherwise removing undesired turbidities, either the beverage can be first pasteurized in a through-flow pasteurizer and then appropriately packaged as aseptically as possible or the packaged beverage can be appropriate pasteurized in the package.

If desired, the beverage may also be carbonized by enriching it with carbon dioxide. In that case the package must be sufficiently gas-tight to enables storage of the beverage for an adequate period of time, e.g., a glass bottle or tin. With products receiving a more medical application other methods of packaging may of course also be chosen, as those conventional in liquid enteral drip feeds etc. The fact is that in specific cases the requiremerts of an operated patient may be similar to those of an athlete immediately after a sporting top performance.

As far as allowed by legal prescriptions, beverages according to the ingention may be enriched with vitamins. For that matter, the beverage always naturally contains a certain amount of riboflavine, vitamin B2, but the content thereof, of the other B vitamins and of vitamin C can be increased to enable the consumer's body to have the digestion of the other ingredients of the beverage proceed as properly as possible.

It has also been found that the beverages according to the ingention are not only consumable as a cool or cooled refreshment, but that they are also quite suitable for being served hot. In a cold environment, e.g., in winter sports events, it has been found that the inventive beverages also remain very palatable if the beverage is consumed near body temperature. In hot condition, too, as is usual with tea, the beverages according to the invention car be served if the flavor type comes up to the consumer's expectations.

Thus, for instance, in a hot beverage a sour taste can soon be stressed too strongly, but as far as such known problems are taken into consideration, the physiologically balanced flavor of the invented beverages is an aspect which also at such higher temperatures leads to unexpected uses.

Both in beverages for cool consumption and in hot beverages there may be selected a flavor type having caffeine processed therein. The stimulating, fatigue relieving effect of caffeine in coffee, tea and cola beverages is of course known, but in general the composition of those beverages is not such that the ingredients meet the requirements of a sporter after having turned in a top performance.

In combination with a beverage having the desired osmotic value which, in addition, supplies energy adapted to the requirements of the sporter, the best use can be made of the stimulating effect of caffeine. As is self-evident to a skilled worker, the beverages according to the invention can also be prepared by dissolving a mixture of dry ingredients in an appropriate amount of water. It is necessary in that case to dry either the ultrafiltration permeate or a mixture thereof with other components, such a maltodextrins, and to mix the dry raw materials, so that the industrial user or the consumer can dissolve the beverage at his discretion by adding the required amount of water.

The invention is elucidated by the following example.

## Example

To prepare a protein concentrate, skimmed milk was subjected to ultrafiltration by means of a DDS plant with membranes having a separating capacity at a molecular weight of 20000.

This permeate was made into a beverage by adding to 600 g permeate 50 g maltodextrin (22-24 DE), 4 g dextrose, 3 g citric acid and 343 g water. The maltodextrin and the dextrose were dissolved in the water, after which the mixture was adjusted to pH 3.8 with citric acid. By adding the sweetener aspartame and an aroma mixture conventional in the preparation of soft drinks of the so-called "up-drink" type, the procuct was flavored, after sediment and turbidity caused by settling and filtration had been removed across a polishing filter.

By means of a dextrose solution the osmotic value was readjusted, until the product had a freezing point of -0.540 ± -0.015°C. The beverage was heated in a through-flow pasteurizer to 78°C for 1 minute and then cooled to 20°C, after which the pasteurized was aseptically packaged in a carton of a conventional type.

Similarly, beverages were made which had been brought to the desired degree of sweetness by means of saccharine. The type of aroma was also varied by adding peppermint aroma, cola aroma and various fruit flavors.

The resulting beverage was consumed by people taking part in various types of sport, such as athletics and footracing, after which the consumers were requested to report on their findings. It was remarkable in this connection that the beverage gave a pleasant flavor impression which was not experienced as bitter in spite of the high potassium content.

Moreover, the beverage gave remarkably few reactions as to side effects, such as a full sensation in the stomach or an excessive secretion of saliva or mucus.

## Claims

1. A process for preparing a beverage suitable as a thirst-quencher after physical exertion, having an isotonic or hypotonic composition, which is capable of compensating for losses of energy and electrolyte, characterized in that isotonic or hypotonic solutions of carbohydrates and, if desired, flavorings, vitamins and other conventional ingredients are added to permeate obtained by ultrafiltration or neutral milk or whey.

2. A process according to claim 1, characterized in that the carbohydrate employed is a maltodextrin product prepared by hydrolysis of starch.

3. A process according to claim 1, characterized in that the carbohydrate employed is a starch hydrolysate having a DE value of 15 to 25.

4. A process according to claim 1, characterized in that the carbohydrate employed is both a maltodextrin product and a sugar selected from the group of saccharose, fructose, glucose or mixtures thereof.

5. A process according to claim 1, characterized in that the flavoring selected is an artificial sweetener.

6. A process according to claim 1, characterized in that the sweetener employed is a dipeptide sweetener.

7. A process according to claim 1, characterized in that the flavoring added is one or more organic acids.

8. A process according to claim 1, characterized in that the starting material is a permeate obtained by ultrafiltration of non-soured whole milk, semi-skimmed milk or skim milk or from non-soured cheese whey or rennet casein whey.

9. A process according to claim 1, characterized in that the starting material is a hypotonic permeate of milk or whey obtained by ultrafiltration through membranes having a selective retention for lactose molecules.

10. A process according to claim 1, characterized in that the permeate obtained by ultrafiltration of milk or whey is impoverished of lactose by concentrating and cooling until crystallization of lactose, after which the amount of water removed during concentration is again added to the beverage.

11. A process according to claim 1, characterized in that proteins, peptides or amino acids are also added to the beverage.

12. A process according to claim 1, characterized in that the mixed beverage is subjected to a preserving heat treatment and the beverage is put into a hermetically closed package.

13. An isotonic or hypotonic beverage obtainable by using the process according to claims 1-12.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FOOD SCIENCE AND TECHNOLOGY ABSTRACT, vol. 86, no. 10, page 150, abstract no. 86061940; S. EL-SHIBINY et al.: "The use of skim milk permeate in the preparation of spray dried beverages. II. Beverage based on strawberry", & ZEITSCHRIFT FÜR LEBENSMITTEL-UNTERSUCHUNG UND -FORSCHUNG; VOL. 181, NO. 3, 1985, P. 223-225 * Abstract * | 1 | A 23 L 2/38 A 23 C 9/142 A 23 L 1/30 |
| A | | 2-13 | |
| D,X | DE-A-2 924 242 (ENEA) * Claims 1,2 * | 1 | |
| A | | 2-13 | |
| A,D | NEDERLANDS MELK- EN ZUIVELTIJDSCHRIFT, vol. 16, no. 3, July/September 1962, pages 153-164; R. JENNESS et al.: "Preparation and properties of a salt solution which simulates milk ultrafiltrate" * Page 164, last paragraph * | 1-13 | TECHNICAL FIELDS SEARCHED (Int. Cl.5) A 23 L A 23 C |
| A,D | US-A-4 312 856 (KORDUNER et al.) * Claims 1-11 * | 1-13 | |
| A,D | NL-A-7 610 539 (JOHNSON & JOHNSON) * Claims 1-16 * | 1-13 | |

The present search report has been drawn up for all claims

| Place of search | Date of completion of the search | Examiner |
|---|---|---|
| THE HAGUE | 21-12-1989 | VAN MOER A.M.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document